# EUROPÄISCHE PATENTSCHRIFT

(11) **EP 3 672 032 B1**
(45) Veröffentlichungstag und Bekanntmachung des Hinweises auf die Patenterteilung: **25.06.2025**
(21) Anmeldenummer: 19213057.3
(22) Anmeldetag: 03.12.2019
(51) Int. Cl.: H02K 5/173, H02K 9/22, H02K 5/128, H02K 11/33

(54) **ELEKTROMOTOR**
ELECTRIC MOTOR
MOTEUR ÉLECTRIQUE

(30) Priorität: 21.12.2018 DE 102018133290
(43) Veröffentlichungstag der Anmeldung: 24.06.2020
(73) Patentinhaber: Bühler Motor GmbH, 90459 Nürnberg (DE)
(72) Erfinder: Leykamm, Jürgen, 91241 Kirchensittenbach (DE)

(56) Entgegenhaltungen:
- WO-A1-2015/063882
- DE-A1- 102004 047 605
- DE-A1- 102014 013 375
- DE-A1- 19 949 755
- DE-U1- 202018 105 137
- GB-A- 2 123 096
- GB-A- 2 406 223
- JP-A- 2015 154 496
- JP-A- H03 107 344
- US-A- 3 717 779
- US-A- 5 509 667
- US-A1- 2017 138 365

## Beschreibung

Die Erfindung betrifft einen Elektromotor gemäß dem Oberbegriff des Patentanspruchs 1. Ein derartiger Elektromotor ist beispielsweise aus DE 20 2018 105 137 U1 bekannt.

Bei Elektromotoren mit hohen Drehzahlen besteht das Problem, dass sich das Kugellager, in dem die Rotorwelle angeordnet ist, sehr stark erwärmt. Diese innerhalb des Elektromotors entstehende Wärme kann zu Schäden, insbesondere an einer Steuerungselektronik führen, die bei kompakt gebauten Elektromotoren meist nahe des Kugellagers angeordnet ist. Insofern besteht das Bedürfnis, die im Kugellager bzw. allgemeine Wälzlager entstehende Wärme abzuführen.

Vielfach werden Elektromotoren in automobilen Anwendungen eingesetzt. Ein Anwendungszweck besteht darin, einen Tellerabscheider zu betreiben, der dafür sorgt, dass Gas aus dem Kurbelwellengehäuse gereinigt wird. Der Tellerabscheider trennt dabei in dem Kurbelwellengas enthaltene Ölpartikel von der reinen Luft. Diese Ölpartikel sind aggressiv und sollten daher die Steuerungselektronik eines Elektromotors nicht erreichen. Insofern ist es erforderlich, den Statorraum, in dem der Stator und die Steuerungselektronik üblicherweise angeordnet sind, hermetisch abzudichten. Dazu wird üblicherweise ein Spalttopf verwendet, der sich durch den Luftspalt zwischen dem Rotor und dem Stator des Elektromotors erstreckt und für eine fluiddichte Abtrennung sorgt. Um Wirbelstromverluste zu vermeiden, ist der Spalttopf aus einem Kunststoff gefertigt. Kunststoffe bilden jedoch einen schlechten Wärmeleiter, so dass die Herausforderung darin besteht, dennoch im Wälzlager entstehende Wärme effizient nach außen abzuführen.

Die eingangs genannte DE 20 2018 105 137 U1 schlägt vor, das Kugellager in einem Kugellagertopf zu befestigen, der in dem Spalttopf angeordnet ist. Der Spalttopf bildet insoweit einen Lagerträger für das in dem Kugellagertopf befestigte Kugellager. Der aus einem Kunststoff gefertigte und insoweit wärmeisolierende Spalttopf weist an einer zu dem Gehäusedeckel zugewandten Seite eine dünne Wandstärke auf und ist über eine Wärmeleitpaste direkt mit dem Gehäusedeckel verbunden. Der metallische Kugellagertopf fungiert als Wärmeleitelement, das innenseitig an dem Spalttopf eng anliegt, so dass ein Wärmeübertragungspfad von dem Kugellager über den Kugellagertopf, den dünnwandigen Abschnitt des Spalttopfs, die Wärmeleitpaste und den Deckel an die Umgebung gebildet ist. Auf diese Weise kann die im Kugellager entstehende Wärme großflächig abgeleitet werden.

Die WO 2015/063882 A1 offenbart einen Elektromotor mit einem Motorgehäuse, in dem ein Stator und ein Rotor in einem Lagerträger drehbar gelagert sind, in dem ein Wärmeleitelement angeordnet ist, in dem ein Wälzlager des Rotors fixiert ist, wobei das Wärmeleitelement direkt mit einem Deckel des Motorgehäuses in wärmeleitendem Kontakt steht, so dass im Wälzlager entstehende Lagerwärme über das das Wärmeleitelement und den Deckel nach außen abgeführt wird.

Aus der US 3,717,779 A ist ein Elektromotor bekannt, der einen laminierten Stator, einen Rotor mit Rotorwelle und Wälzlager umfasst, die in einem Lagerträger montiert sind, der einen becherförmigen Flansch umfasst, das an seinen kleineren Enden starr die Lagergehäuse hält. An ihren größeren Enden sind die Flansche zentral mit dem laminierten Stator innerhalb seiner Endspulen verbunden, die in ein Kunststoffformteil eingebettet sind. Die beabstandeten Kühlöffnungen sind in ringförmigen Reihen oder auf irgendeine andere geeignete Weise in den becherförmigen Flanschen angeordnet. Die Lagergehäuse sind starr in die Flansche eingegossen, so dass die Lagergehäuse mittels eines nach außen verlaufenden Flansches am offenen inneren Ende des Flansches fest mit dem nichtmetallischen Material der Flansche verbunden sind. Der Lagerträger umfasst eine zentrale Lageranordnung mit axial geteilten metallischen Lagergehäusen mit einem Satz von Rollen zum Drehen der Welle. Die geteilte Lageranordnung ist an ihrer Außenseite mit dem Kunststoff des Lagerträgers derart verbunden, dass eine starke Haftung an dem Kunststofffformteil erhalten wird, während gleichzeitig die vergrößerten freien Metalloberflächen 36 die erzeugte Wärme an die Umgebungsluft fördern.

Die DE 199 49 755 A1 offenbart eine Handwerkzeugmaschine mit einem in einem Gehäuse angeordneten Motor, der in einer gelagerten Antriebswelle mit einem Einsatzwerkzeug in Wirkverbindung bringbar ist, wobei zumindest ein Lager der Antriebswelle wenigstens in radialer Richtung über ein Kunststoffteil abgestützt ist. Das Lager ist in axialer Richtung über zumindest eine Kontaktfläche mit wenigstens einem zum Gehäuse ortsfesten, separaten metallischen Bauteil verbunden.

Aus der GB 2 406 223 A ist eine Rotoranordnung für einen Elektromotor oder Generator, der in Haushaltsgeräten wie z. B. Staubsaugern, eingesetzt wird, bekannt. Die Rotoranordnung umfasst eine Welle, die einen Rotor und ein Ausgleichselement, welches ein Codierelement umfasst, trägt. Die Gehäuse für die Lager sind wärmeleitend.

Die Druckschrift US 2017/0138365 A1 offenbart einen elektrischen Lader, der einen Elektromotor zum Antreiben eines Kompressors verwendet. Die Elektronikeinheit umfasst ein zylindrisches Motorgehäuse, eine Gehäuseplatte, Lagerhalter, Lager, eine Welle, einen Rotor, Spulen und eine Wärmeleitpaste. Ein Teil der Wärme der Spulen wird über einen Wärmeleitungskanal auf das Lager übertragen, das die Wärmeleitpaste und die Lagerhalter enthält.

Aus der DE 10 2004 047 605 A1 ist eine elektrische Maschine, insbesondere ein Bürstenmotor, mit Vorrichtungen zur Entwärmung des Elektromotors bekannt, wobei insbesondere Lagerstellen und Bürsten gekühlt werden. Ein Lager ist auf der Welle der elektrischen Maschine in einer Lageraufnahme eines Gehäuses angeordnet und ist mittels eines Lagerhalters im Gehäuse gehalten. Der Lagerhalter umfasst einen Haltebereich, an welchem das Lager gehalten wird, und einen verlängerten Bereich, welcher durch eine Öffnung im Gehäuse geführt wird. Somit seht der verlängerte Bereich aus der Öffnung im Gehäuse hervor und die Wärme von der Welle wird über das Lager und den Lagerhalter zum verlängerten Bereich und dann dort an die Umgebungsluft abgeführt werden.

Die DE 10 2014 013 375 A1 offenbart eine Vorrichtung und ein Verfahren zur Herstellung einer mehrlagigen Leiterplatte, welche mindestens eine Lage mit einem elektrisch isolierenden Material und mindestens ein in die Leiterplatte eingebettetes Dickkupfer-Flachprofil aufweist, wobei auf der Unterseite des Dickkupfer-Flachprofils mindestens ein thermisch leitfähiges Kontaktierungselement in die Leiterplatte eingebettet ist, welches an seiner Außenseite mit einem Kühlkörper verbunden ist. Die Wärme des elektrischen Bauteils wird über ein Interface und ein zumindest teilweise flächiges Element aus Kupfer-Außenlage abgeleitet. Zusätzlich dazu ist außerhalb des elektrischen Bauteils ein Thermovias angeordnet, welches die Wärme des elektrischen Bauteils auf die untere Kupfer-Außenlage und anschließend über das thermische Interface in einen Kühlkörper leitet. Ausgehend von diesem Stand der Technik ist es Aufgabe der Erfindung, einen Elektromotor anzugeben, bei dem eine Verbesserung in der Wärmeableitung von dem die Rotorwelle lagernden Wälzlager erreicht wird. Insbesondere ist es Aufgabe der Erfindung, den Elektromotor gemäß DE 20 2018 105 137 U1 weiterzuentwickeln und im Hinblick auf die Wärmeabfuhr zu verbessern. Eine weitere Aufgabe besteht darin, den Elektromotor gemäß DE 20 2018 105 137 U1 im Hinblick auf die Produktionskosten zu verbessern.

Erfindungsgemäß wird diese Aufgabe durch den Gegenstand des Patentanspruchs 1 oder durch den Gegenstand des Patentanspruchs 7 gelöst.

So beruht die Erfindung auf dem Gedanken, einen Elektromotor mit einem Motorgehäuse anzugeben, in dem ein Stator und ein Rotor angeordnet sind. Der Rotor ist in einem Lagerträger drehbar gelagert, in dem ein Wärmeleitelement angeordnet ist. In dem Wärmeleitelement ist ein Wälzlager des Rotors fixiert. Erfindungsgemäß steht das Wärmeleitelement direkt mit einem Deckel des Motorgehäuses in wärmeleitendem Kontakt, so dass im Wälzlager entstehende Lagerwärme über das Wärmeleitelement und den Deckel nach außen abgeführt wird.

Im Unterschied zu der bekannten Gestaltung gemäß DE 20 2018 105 137 U1 ist also bei der Erfindung vorgesehen, dass das Wärmeleitelement direkt mit dem Deckel des Motorgehäuses in Kontakt steht. Auf den dazwischen angeordneten Abschnitt des Spalttopfes wird insoweit verzichtet. Damit ist sichergestellt, dass Materialien mit guter Wärmeleitfähigkeit, nämlich das Wärmeleitelement und der Deckel des Motorgehäuses, unmittelbar aneinander anliegen, so dass eine besonders effiziente Wärmeableitung erfolgt. Mit anderen Worten wird durch den Verzicht des schlecht wärmeleitenden Abschnitts des Spalttopfes eine verbesserte Wärmeableitung vom Wälzlager an die Außenumgebung erreicht.

Bevorzugt ist bei der Erfindung vorgesehen, dass das Wärmeleitelement an dem Deckel direkt anliegt, wobei zwischen dem Wärmeleitelement und dem Deckel eine Wärmeleitpaste angeordnet ist. In diesem Zusammenhang ist zu betonen, dass im Rahmen der vorliegenden Anmeldung ein direkter Kontakt zwischen dem Wärmeleitelement und dem Deckel bzw. zwischen dem Wärmeleitelement und weiteren Bauteilen auch dann vorliegt, wenn zwischen dem Wärmeleitelement und dem Deckel bzw. dem weiteren Bauteil eine Wärmeleitpaste angeordnet ist. Ein direkter Kontakt im Sinne der Erfindung liegt dann nicht vor, wenn zwischen dem Wärmeleitelement und dem Deckel bzw. dem weiteren Bauteil ein zusätzliches, formstabiles Bauteil angeordnet oder ein gas- oder flüssigkeitsdurchspülter Spalt vorgesehen ist. Als direkte Verbindung wird also im Sinne der vorliegenden Anmeldung eine Verbindung zwischen zwei Bauteilen verstanden, bei welcher die beiden Bauteile unmittelbar aneinander anliegen oder wobei zwischen diesen Bauteilen eine fluide Substanz, insbesondere eine Wärmeleitpaste, angeordnet ist.

Ferner ist bei der Erfindung vorgesehen, dass der Lagerträger gemeinsam mit dem Wärmeleitelement ein fluiddichtes, insbesondere gasdichtes, Trennelement zwischen einem Rotorraum, in dem der Rotor angeordnet ist, und einem Statorraum bildet, in dem der Stator angeordnet ist. Konkret kann das Motorgehäuse einen Rotorraum und einen Statorraum aufweisen, die fluiddicht voneinander getrennt sind. Die Trennung erfolgt vorzugsweise durch das Trennelement, das durch den Lagerträger einerseits und das Wärmeleitelement andererseits gebildet ist. Damit ist sichergestellt, dass den Rotorraum durchströmendes Gas aus dem Kurbelgehäuse nicht in den Statorraum eindringt und dort wegen der im Gas enthaltenen Verunreinigungen zu Schäden führt.

Um eine direkte Verbindung zwischen dem Wärmeleitelement und dem Deckel herzustellen, ist bei der Erfindung vorgesehen, dass der Lagerträger eine stirnseitige Öffnung aufweist, durch die sich das Wärmeleitelement hindurch erstreckt. Der Lagerträger umschließt das Wärmeleitelement also nicht vollständig, sondern lässt eine Öffnung frei, durch die das Wärmeleitelement hindurchtritt, um so in den direkten Kontakt zum Deckel zu gelangen. Der Lagerträger kann im Wesentlichen durch einen stirnseitig offenen Spalttopf gebildet sein. Insofern liegt allerdings keine Topfform vor, da anstelle eines Bodens des Spalttopfs eine Öffnung besteht.

Um die Abdichtung zwischen dem Lagerträger einerseits und dem Wärmeleitelement andererseits sicherzustellen, ist bei der Erfindung vorgesehen, dass der Lagerträger, insbesondere im Bereich einer stirnseitigen Öffnung, durch die das Wärmeleitelement hindurchtritt, eine ringförmige Ausnehmung aufweist, in der ein Dichtelement angeordnet ist. Das Dichtelement dichtet den Lagerträger gegen das Wärmeleitelement ab. Das Dichtelement kann als O-Ring oder als Dichtmasse ausgeführt sein. Die Dichtmasse kann in flüssiger Form in die Ausnehmung eingebracht werden. Zur Fixierung des Dichtelements, insbesondere des O-Rings, kann zusätzlich eine Sicherungsscheibe vorgesehen sein, die auf das Wärmeleitelement aufgepresst ist. Die Sicherungsscheibe kann dabei das Dichtelement in die ringförmige Ausnehmung einpressen, so dass das Dichtelement gegen den Lagerträger und das Wärmeleitelement vorgespannt ist.

Die Verwendung einer Wärmeleitpaste ist bevorzugt, um Fertigungstoleranzen sowie Unebenheiten auszugleichen und so zu vermeiden, dass Luft zwischen den entsprechenden Bauteilen vorliegt, welche die Wärmeleitung beeinträchtigen würde.

Bei einer weiteren bevorzugten Ausführungsform der Erfindung ist eine Steuerungselektronik vorgesehen, die auf einer Leiterplatte angeordnet ist. Die Leiterplatte kann eine Durchgangsöffnung aufweisen, durch die sich das Wärmeleitelement hindurch erstreckt. Diese Gestaltung der Leiterplatte ist bevorzugt, um sicherzustellen, dass das Wärmeleitelement in den direkten Kontakt zum Deckel des Motorgehäuses gelangt.

Die Leiterplatte ist vorzugsweise in dem Statorraum angeordnet. Damit ist sichergestellt, dass die Leiterplatte von dem Rotorraum, der mit dem Kurbelgehäusegas durchströmt wird, fluiddicht abgetrennt ist. So ist die Leiterplatte vor schädlichen Einwirkungen durch das Kurbelgehäusegas geschützt.

Bevorzugt ist ferner vorgesehen, dass das Wärmeleitelement zumindest abschnittsweise vom Lagerträger umspritzt ist. Die Umspritzung des Wärmeleitelements ermöglicht eine besonders einfache Herstellung und stellt eine gute Verbindung zwischen dem Wärmeleitelement und dem Lagerträger dar. Insbesondere bei der Serienfertigung lassen sich so Produktionskosten einsparen.

Ein nebengeordneter Aspekt der Erfindung betrifft einen Elektromotor mit einem Motorgehäuse, in dem ein Stator und ein Rotor angeordnet sind. Der Rotor in einem Lagerträger drehbar gelagert, in dem ein Wärmeleitelement angeordnet ist. In dem ein Wälzlager des Rotors fixiert. Der Lagerträger steht dabei mit dem Deckel des Motorgehäuses in wärmeleitendem Kontakt, so dass im Wälzlager entstehende Lagerwärme über das Wärmeleitelement, den Lagerträger und den Deckel nach außen abgeführt wird. Bei diesem nebengeordneten Aspekt der Erfindung ist erfindungsgemäß vorgesehen, dass das Wärmeleitelement durch eine beidseitig längsaxial offene Hülse gebildet ist, die länger als das Wälzlager ist.

Im Unterschied zu der Lehre der DE 20 2018 105 137 U1, bei welcher das Wärmeleitelement durch einen Kugellagertopf mit einem Topfboden gebildet ist, ist bei diesem Aspekt der Erfindung vorgesehen, eine längsaxial offene Hülse einzusetzen. Die Hülse weist eine Länge auf, die länger ist als die axiale Länge des Wälzlagers. Damit wird erreicht, dass im Wälzlager entstehende Wärme über eine große Fläche verteilt wird und so an den Lagerträger übertragen wird. Die beidseitig längsaxial offene Hülse ist in der Herstellung deutlich einfacher zu erzeugen, als die Topfform aus dem Stand der Technik, so dass mit der Erfindung auch eine Reduktion der Produktionskosten erreicht wird. Es hat sich überraschend gezeigt, dass trotz der längsaxial offenen Hülse, also durch Verzicht des Spalttopfbodens aus dem Stand der Technik, dennoch eine ausreichend gute Wärmeabfuhr erreicht wird, so dass Schäden an dem Stator bzw. an der Leiterplatte im Statorraum vermieden werden.

Bevorzugt ist vorgesehen, dass der Lagerträger hingegen einen Boden aufweist, der direkt an dem Deckel des Motorgehäuses anliegt. Zwischen dem Lagerträger und/oder der Leiterplatte und dem Deckel kann eine Wärmeleitplaste angeordnet sein. Durch den Boden wird sichergestellt, dass der Lagerträger insgesamt als einstückiges Bauteil gestaltet werden kann, wodurch eine gute und dichte Abtrennung zwischen dem Statorraum und dem Rotorraum erfolgt. Um dennoch eine gute Wärmeabfuhr zu erreichen, ist vorgesehen, dass der Boden direkt an dem Deckel des Motorgehäuses anliegt. Wie eingangs bereits erwähnt, gilt auch hier, dass eine direkte Anlage auch dann vorliegt, wenn zwischen den jeweils aneinander anliegenden Bauteilen eine Wärmeleitpaste angeordnet ist.

Die Hülse liegt vorzugsweise stirnseitig direkt an dem Boden des Lagerträgers an. Zumindest über die Stirnfläche wird dabei Wärme an den Boden des Lagerträgers übertragen, die daraufhin weiter den Deckel des Motorgehäuses geleitet wird.

Bei einer bevorzugten Ausführungsform ist außerdem vorgesehen, dass die Hülse stirnseitig einen radial nach innen vorstehenden Flansch aufweist, der eine Halteöffnung begrenzt und formschlüssig in einem Hinterschnitt einer Lageraufnahme des Lagerträgers aufgenommen ist. Der stirnseitig radial nach innen vorstehende Flansch hat mehrere Vorteile. Einerseits wird dadurch die Wärmeübertragungsfläche erhöht, so dass eine verbesserte Wärmeableitung erreicht wird. Andererseits wird die Hülse auf diese Weise beim Umspritzen mit dem Lagerträger zeitgleich fixiert, so dass insgesamt die Herstellung des Elektromotors vereinfacht wird. Darüber hinaus ist eine formschlüssige Fixierung vorteilhaft, um Kräfte im Betrieb des Elektromotors gut aufnehmen zu können.

Besonders bevorzugt ist vorgesehen, dass die Halteöffnung eine mehreckige Form aufweist. Beim Umspritzen der Hülse mit dem Lagerträgermaterial dringt dieses in die Halteöffnung ein und füllt die Halteöffnung vollständig aus. Indem die Halteöffnung eine mehreckige Form aufweist, wir dadurch eine Verdrehsicherung zwischen dem Lagerträger und der Hülse geschaffen.

Die Erfindung wird im Folgenden anhand von Ausführungsbeispielen unter Bezugnahme auf die beigefügten, schematischen Zeichnungen näher erläutert. Darin zeigen:
- Fig. 1: eine Längsschnittansicht durch einen erfindungsgemäßen Elektromotor nach einem bevorzugten Ausführungsbeispiel, wobei das Wärmeleitelement direkt am Deckel des Motorgehäuses anliegt;
- Fig. 2: eine Teillängsschnittansicht eines erfindungsgemäßen Elektromotors nach einem weiteren bevorzugten Ausführungsbeispiel, wobei das Wärmeleitelement als zylinderförmige Hülse ausgebildet ist, die direkt am Deckel des Motorgehäuses anliegt;
- Fig. 3: eine Längsschnittansicht eines erfindungsgemäßen Elektromotors nach einem weiteren bevorzugten Ausführungsbeispiel, bei dem das Wärmeleitelement als Hülse ausgebildet ist, die mittelbar über den Lagerträger wärmeleitend mit dem Deckel des Motorgehäuses verbunden ist;
- Fig. 4: eine Detailansicht des Elektromotors gemäß Fig. 4 mit Darstellung des Wärmeleitpfads;
- Fig. 5: eine Detailansicht eines Längsschnitts durch einen erfindungsgemäßen Elektromotor nach einem weiteren bevorzugten Ausführungsbeispiel, wobei das Wärmeleitelement eine Hülse mit einem radial nach innen vorstehenden Flansch aufweist, der in einen Hinterschnitt einer Lageraufnahme des Lagerträgers eingreift.

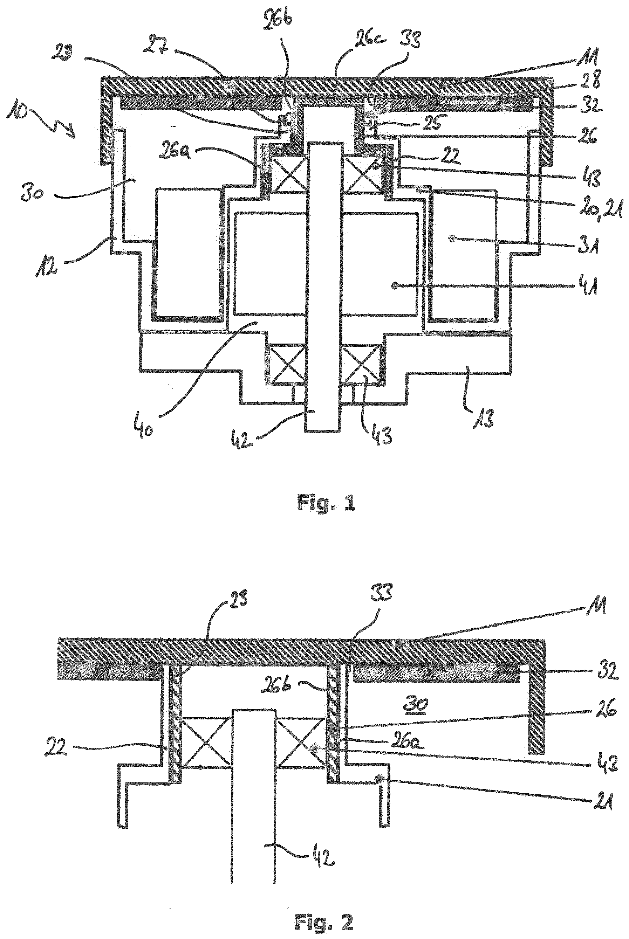

Fig. 1 zeigt ein besonderes bevorzugtes Ausführungsbeispiel des erfindungsgemäßen Elektromotors, der sich dadurch auszeichnet, dass er eine besonders gute Wärmeableitung der Abwärme des Rotorwälzlagers aufweist.

Im Allgemeinen weist der Elektromotor ein Motorgehäuse 10 auf, das einen Deckel 11 umfasst. Der Deckel 11 ist vorzugsweise aus einem wärmeleitenden Material, insbesondere einem Metall, gebildet. Ferner weist das Motorgehäuse eine Außenwand 12 auf, die mit dem Deckel 11 dichtend verbunden ist. Insbesondere kann der Deckel 11 auf die Außenwand 12 aufgepresst sein.

Die Außenwand 12 ist Teil eines Lagerträgers 21, der gemeinsam mit dem Deckel 11 einen Statorraum 30 begrenzt. Innerhalb des Statorraums 30 ist der Stator 31 des Elektromotors angeordnet. Ferner ist im Statorraum 30 eine Steuerungselektronik angeordnet, die eine Leiterplatte 32 aufweist bzw. auf der Leiterplatte 32 angeordnet ist. Die Leiterplatte 32 ist vorzugsweise direkt wärmeleitend mit dem Deckel 11 verbunden, wobei zwischen der Leiterplatte 32 und dem Deckel 11 vorzugsweise eine Wärmeleitpaste angeordnet ist.

Der Lagerträger 21 ist vorzugsweise aus einem Kunststoff gebildet und erstreckt sich durch einen Luftspalt zwischen dem Stator 31 und einem Rotor 41. Der Rotor 41 ist in einem Rotorraum 40 angeordnet, der von dem Statorraum 30 durch ein Trennelement 20 getrennt ist. Das Trennelement 20 umfasst den Lagerträger 21 sowie ein Wärmeleitelement 26, das mit dem Lagerträger 21 verbunden ist.

Der Lagerträger 26 weist eine Lageraufnahme 22 auf, in der mittels des Wärmeleitelements 26 das Wälzlager 43 angeordnet ist. Konkret ist das Wälzlager 43 in das Wärmeleitelement 26 eingepresst, wobei das Wärmeleitelement 26 zumindest mit seinem Halteabschnitt 26a in der Lageraufnahme 22 des Lagerträgers 21 angeordnet ist.

In dem Rotorraum 40 ist ferner eine Rotorwelle 42 angeordnet, die einerseits in einem Wälzlager 43 gelagert ist, das in dem Wärmeleitelement 26 fixiert ist. Andererseits ist die Rotorwelle 42 in einem weiteren Wälzlager 43 rotierend gelagert, das in einem Lagerdeckel 13 fixiert ist. Der Lagerdeckel 13 liegt bei dem Ausführungsbeispiel gemäß Fig. 1 unmittelbar an dem Lagerträger 21 an. Es ist jedoch auch möglich, dass der Elektromotor außerhalb des Lagerträgers 21 andersartig gestaltet ist. Beispielsweise kann ein längliches Gehäuse vorgesehen sein, wobei insbesondere auch eine entsprechend verlängerte Rotorwelle 42 eingesetzt wird.

Das Wärmeleitelement 26 ist vorzugsweise aus einem wärmeleitenden Material, insbesondere einem Metall gebildet. Bei dem Ausführungsbeispiel gemäß Fig. 1 bildet das Wärmeleitelement 26 eine topfartige Form mit einem Halteabschnitt 26a, einem Verteilabschnitt 26b und einem Wärmeleitboden 26c.

Der Halteabschnitt 26a des Wärmeleitelements 26 nimmt ein Wälzlager 43 des Rotors 41 auf. Das Wälzlager 43 ist vorzugsweise als Kugellager ausgebildet. Konkret kann das Wälzlager 43 in den Halteabschnitt 26a des Wärmeleitelements 26 eingepresst sein.

An den Halteabschnitt 26a des Wärmeleitelements 26 schließt sich der Verteilabschnitt 26b an. Der Verteilabschnitt 26b weist einen Querschnittsdurchmesser auf, der kleiner ist als der Querschnittsdurchmesser des Halteabschnitts 26a. Der Verteilabschnitt 26b bildet eine zusätzliche Wärmeübertragungsmasse, so dass im Wälzlager 43 entstehende Wärme effizient über das Wärmeleitelement 26 verteilt wird.

Der Verteilabschnitt 26b erstreckt sich durch eine stirnseitige Öffnung 23 des Lagerträgers 21. Dabei steht der Verteilabschnitt 26b über einen Endabschnitt 25 des Lagerträgers 21 vor und reicht bis zum Deckel 11.

Insbesondere weist das Wärmeleitelement 26 bei dem Ausführungsbeispiel gemäß Fig. 1 einen Wärmeleitboden 26c auf, der den Verteilabschnitt 26b längsaxial begrenzt und das Wärmeleitelement 26 längsaxial verschließt. Der Wärmeleitboden 26c liegt direkt, jedoch vorzugsweise unter Zwischenlage einer Wärmeleitpaste, an dem Deckel 11 an. Das Wärmeleitelement 26 erstreckt sich dabei durch eine Durchgangsöffnung 33, die in der Leiterplatte 32 ausgebildet ist. Die Durchgangsöffnung 33 weist dabei einen Durchmesser auf, der größer als der Durchmesser des Verteilabschnitts 26b ist, so dass zwischen dem Verteilabschnitt 26b und der Leiterplatte 32 ein Luftspalt verbleibt. Dadurch wird ein direkter Wärmeeintrag in die Leiterplatte 32 vermieden.

Um zu vermeiden, dass aufgrund unterschiedlicher Wärmeausdehnung zwischen dem Material des Wärmeleitelements 26 und des Lagerträgers 21 ein im Rotorraum 40 befindliches Gas in den Statorraum 30 übertreten kann, ist bei dem Ausführungsbeispiel gemäß Fig. 1 vorgesehen, dass der Lagerträger 21 stirnseitig eine ringförmige Ausnehmung 27 aufweist. Die ringförmige Ausnehmung 27 ist radial nach innen offen, so dass die ringförmige Ausnehmung 27 gemeinsam mit einer Außenfläche des Verteilabschnitts 26b des Wärmeleitelements 26 eine Nut bildet, in der ein Dichtelement 28 angeordnet ist. Das Dichtelement 28 kann insbesondere durch einen O-Ring gebildet sein. Alternativ kann das Dichtelement 28 durch eine Dichtmasse gebildet sein. Die Dichtmasse kann in flüssiger Form in die Ausnehmung 27 eingebracht werden. Die Dichtmasse kann ein silikonenthaltendes Material umfassen.

Um das Dichtelement 28 zur Verbesserung der Abdichtwirkung gegen die Ausnehmungen 27 und das Wärmeleitelement 26 vorzuspannen, kann zusätzlich eine in Fig. 1 nicht dargestellte Sicherungsscheibe vorgesehen sein. Die Sicherungsscheibe kann insbesondere über den Verteilabschnitt 26b des Wärmeleitelements 26 aufgepresst sein und das Dichtelement 28 in die Ausnehmungen 27 vorspannen.

Fig. 2 zeigt ein weiteres Ausführungsbeispiel, bei welchem das Wärmeleitelement 26 als Hülse ausgebildet ist, die an ihren beiden längsaxialen Enden geöffnet ist. Insbesondere ist das Wärmeleitelement 26 als hohlzylinderförmige Hülse ausgebildet. Diese Gestaltung des Wärmeleitelements 26 ist besonders einfach herstellbar und reduziert entsprechend die Produktionskosten des Elektromotors.

Das als Hülse ausgebildete Wärmeleitelement 26 weist ebenfalls einen Halteabschnitt 26a und einen Verteilabschnitt 26b auf. Der Verteilabschnitt erstreckt sich über die Länge des Wälzlagers 43 hinaus bis an den Deckel 11. Stirnseitig besteht also eine direkte, wärmeleitende Verbindung zwischen der Hülse und dem Deckel 11. Dabei kann zwischen der ringförmigen Stirnfläche der Hülse und dem Deckel 11 eine Wärmeleitpaste angeordnet sein.

Bei dem Ausführungsbeispiel gemäß Fig. 2 erstreckt sich der Lagerträger 21 ebenfalls bis an den Deckel 11. Allerdings erfolgt die Wärmeübertragung direkt über den Verteilabschnitt 26b des Wärmeleitelements 26 an den Deckel 11. Der Lagerträger 21 bildet vielmehr eine Wärmeisolierung, wodurch erreicht wird, dass der Luftspalt zwischen der Leiterplatte 32 und dem Trennelement 20, das durch den Lagerträger 21 und das Wärmeleitelement 26 gebildet ist, verringert werden kann. Es bleibt somit mehr Bauraum für die Leiterplatte 32. Konkret kann die Durchgangsöffnung 33 in der Leiterplatte 32 nahezu denselben Durchmesser aufweisen, wie der Endabschnitt 25 des Lagerträgers 21. Durch die wärmeisolierende Wirkung des Lagerträgers 21 ist dennoch gewährleistet, dass kein direkter Wärmeeintrag vom Wärmeleitelement 26 in die Leiterplatte 32 erfolgt.

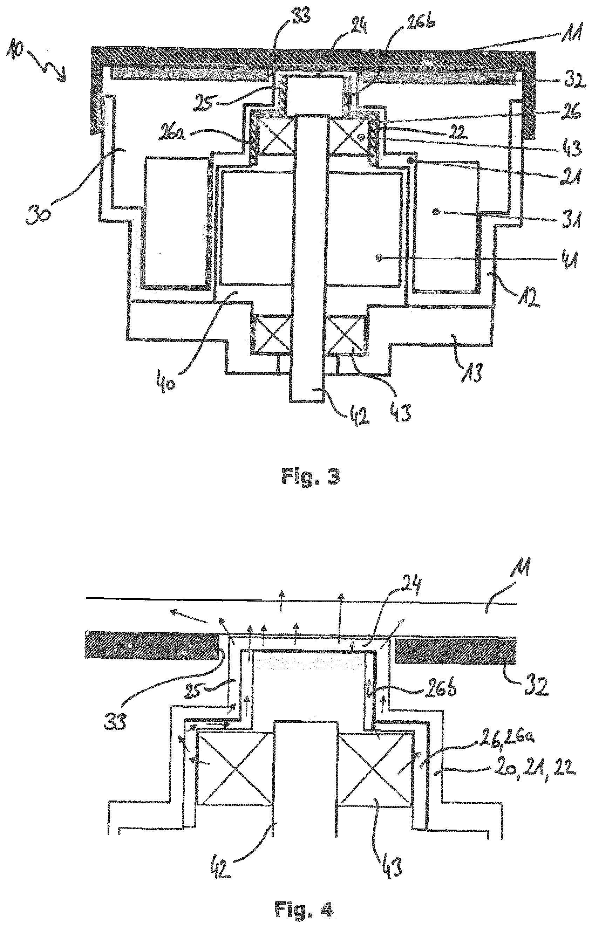

Der Elektromotor gemäß dem Ausführungsbeispiel nach Fig. 3 entspricht in seinem äußeren Aufbau im Wesentlichen dem Elektromotor gemäß Fig. 1. Ein Unterschied besteht im Aufbau des Lagerträgers 21 und des Wärmeleitelements 26 sowie in der wärmeleitenden Anbindung des Wärmeleitelements 26 an den Deckel 11 des Motorgehäuses 10.

Insbesondere ist vorgesehen, dass der Lagerträger 21 einen Boden 24 aufweist, der den Endabschnitt 25 des Lagerträgers 21 längsaxial abschließt. Damit ist der Lagerträger 21 vollständig einstückig gebildet und bildet somit eine gute Abdichtung zwischen dem Statorraum 30 und dem Rotorraum 40. Ein zusätzliches Dichtelement 28 ist nicht erforderlich.

Das Wärmeleitelement 26 ist im Unterschied zu dem Ausführungsbeispiel gemäß Fig. 1 als Hülse ausgebildet, die an beiden längsaxialen Enden offen ist. Dabei weist die Hülse einen Halteabschnitt 26a auf, in dem das Wälzlager 43 fixiert ist. Ferner ist ein Verteilabschnitt 26b vorgesehen, der längsaxial über das Wälzlager 43 vorsteht und einen kleineren Querschnittsdurchmesser als der Halteabschnitt 26a aufweist. Das Wärmeleitelement 26 ist von dem Lagerträger 21 umspritzt und liegt stirnseitig direkt an dem Boden 24 des Lagerträgers 21 an. Der Boden 24 ist ferner mittels einer Wärmeleitpaste direkt wärmeleitend mit dem Deckel 11 verbunden.

Obwohl zwischen dem Wärmeleitelement 26 und dem Deckel 11 der Boden 24 des Lagerträgers 21 angeordnet ist, hat sich gezeigt, dass dennoch eine gute Wärmeabfuhr der Abwärme des Wälzlagers 43 erreicht wird. Thermosimulationen haben ergeben, dass bereits die verbesserte Wärmeverteilung über das Wärmeleitelement 26, das eine große Wärmeableitfläche aufweist, ausreicht, um das Wälzlager 43 vor Temperaturschäden zu bewahren. Darüber hinaus ist der Boden 24 des Lagerträgers 21 dünnwandig ausgebildet bzw. weist eine dünnere Wandstärke als beispielsweise die Außenwand 12 auf. Dadurch ist trotz des Kunststoffmaterials des Lagerträgers 21 sichergestellt, dass Wärme von dem Wärmeleitelement 26 an den Deckel 11 übertragen wird.

Die Wärmeableitung ist gut in Fig. 4 illustriert, die eine Vergrößerung des Wärmeleitelements 26 im Einbauzustand zeigt. Anhand der in Fig. 4 gezeigten Pfeile ist erkennbar, dass im Wälzlager 43 erzeugte Wärme über das Wärmeleitelement 26 in Richtung des Deckels 11 abgeleitet wird. Dabei durchtritt die Wärme auch den Boden 24 des Lagerträgers 21.

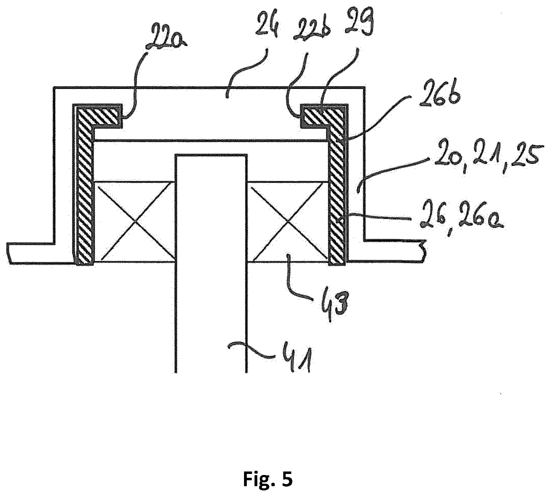

Fig. 5 zeigt ein Ausführungsbeispiel, bei dem das Wärmeleitelement 26 ebenfalls als Hülse ausgebildet ist. Das Wärmeleitelement 26 umfasst einen Halteabschnitt 26a, in dem Wälzlager 43 fixiert ist. Ferner ist ein Verteilabschnitt 26b vorgesehen, der sich an den Halteabschnitt 26a anschließt und im Wesentlichen denselben Außendurchmesser aufweist, wie der Halteabschnitt 26a. Stirnseitig weist das Wärmeleitelement 26 einen radial nach innen vorstehenden Flansch 29 auf, der in einem Hinterschnitt 22a der Lageraufnahme 22 des Lagerträgers 21 angeordnet ist. Der Flansch 29 begrenzt konkret eine Halteöffnung 22b des Wärmeleitelements 26, wobei diese Halteöffnung 22b vorzugsweise eine mehreckige Querschnittsform aufweist.

Im Herstellungsprozess wird das Wärmeleitelement 26 vorzugsweise mit dem Lagerträger 21 umspritzt. Konkret ist das Wärmeleitelement 26 vorzugsweise aus einem Metall gebildet und wird durch einen Kunststoff umspritzt, der dann den Lagerträger 21 bildet. Dabei fließt das Material des Lagerträgers 21 in die Halteöffnung 22b und um den Flansch 29 herum, so dass sich der Hinterschnitt 22a bildet. Die Halteöffnung 22b, die vorzugsweise eine mehreckige Querschnittsform bzw. Kontur aufweist, ist damit formschlüssig in den Lagerträger 21 eingepasst, so dass sich eine Verdrehsicherung bildet.

Mit dem Umspritzvorgang bildet sich außerdem der Boden 24 des Lagerträgers 21, der vorzugsweise direkt an dem Deckel 11 des Motorgehäuses 10 anliegt. Die Wärmeabfuhr der Lagerwärme des Wälzlagers 43 erfolgt also im Wesentlichen analog zu dem Ausführungsbeispiel gemäß Fig. 3.

Für alle Ausführungsbeispiel gilt, dass das Wärmeleitelement 26 vorzugswiese als Tiefziehteil oder Sinterteil im Falle einer topfförmigen Ausgestaltung und als Drehteil oder Sinterteil im Falle einer hülsenförmigen Ausgestaltung gebildet ist. Besonders bevorzugt ist die Verwendung eines Sinterteils als Wärmeleitelement 26, da auf diese Weise eine besonders genaue Passbohrung für das Wälzlager 43 hergestellt werden kann. Besonders bevorzugt ist es, wenn das Wärmeleitelement 26 in den Lagerträger 21 eingespritzt bzw. von dem Lagerträger 21 umspritzt ist. Alternativ kann vorgesehen sein, dass das Wärmeleitelement 26 in den Lagerträger 21 eingepresst, eingeklebt oder durch Ultraschallschweißen eingebettet ist.

Bei den Ausführungsbeispielen, die ein Wärmeleitelement 26 in Form einer Hülse vorsehen, ist es vorteilhaft, wenn das Wälzlager 43, insbesondere ein Kugellager, mit Dichtscheiben ausgestattet ist.

Die besonderen Vorteile der hier beschriebenen Erfindung, die bei allen Ausführungsbeispielen realisiert werden, bestehen darin, dass einerseits eine äußerst gute Wärmeabfuhr aus dem Wälzlager 43 erreicht wird. Durch die verbesserte Wärmeableitung ist es möglich, anstelle von Hochtemperaturwälzlagern Standardlager einzusetzen, so dass insgesamt die Produktionskosten erheblich gesenkt werden können. Andererseits bietet die erfindungsgemäße Gestaltung des Trennelements 20 eine ausreichend gute Abdichtung zwischen dem Statorraum 30 und dem Rotorraum 40, so dass ein Eindringen von Kurbelgehäusegas in den Statorraum 30 effizient vermieden werden kann.

### Bezugszeichenliste

- 10: Motorgehäuse
- 11: Deckel
- 12: Außenwand
- 13: Lagerdeckel
- 20: Trennelement
- 21: Lagerträger
- 22: Lageraufnahme
- 22a: Hinterschnitt
- 22b: Halteöffnung
- 23: Stirnseitige Öffnung
- 24: Boden
- 25: Endabschnitt
- 26: Wärmeleitelement
- 26a: Halteabschnitt
- 26b: Verteilabschnitt
- 26c: Wärmeleitboden
- 27: Ringförmige Ausnehmung
- 28: Dichtelement
- 29: Flansch
- 30: Statorraum
- 31: Stator
- 32: Leiterplatte
- 33: Durchgangsöffnung
- 34: Thermovias
- 40: Rotorraum
- 41: Rotor
- 42: Rotorwelle
- 43: Wälzlager

## Patentansprüche

1. Elektromotor mit einem Motorgehäuse (10), in dem ein Stator (31) und ein Rotor (41) angeordnet sind, wobei der Rotor (41) in einem Lagerträger (21) drehbar gelagert ist, in dem ein Wärmeleitelement (26) angeordnet ist, in dem ein Wälzlager (43) des Rotors (41) fixiert ist, wobei das Wärmeleitelement (26) direkt mit einem Deckel (11) des Motorgehäuses (10) in wärmeleitendem Kontakt steht, so dass im Wälzlager (43) entstehende Lagerwärme über das Wärmeleitelement (26) und den Deckel (11) nach außen abgeführt wird, wobei der Lagerträger (21) gemeinsam mit dem Wärmeleitelement (26) ein fluiddichtes, insbesondere gasdichtes, Trennelement (20) zwischen einem Rotorraum (40), in dem der Rotor (41) angeordnet ist, und einem Statorraum (30) bildet, in dem der Stator (31) angeordnet ist, wobei der Lagerträger (21) eine stirnseitige Öffnung (23) aufweist, durch die sich das Wärmeleitelement (26) hindurch erstreckt und über einen Endabschnitt (25) des Lagerträgers (21) vorsteht und bis zum Deckel (11) reicht und wobei der Lagerträger (21), im Bereich der stirnseitigen Öffnung (23), eine ringförmige Ausnehmung (27) aufweist, in der ein Dichtelement (28) angeordnet ist.

2. Elektromotor nach Anspruch 1,
**dadurch gekennzeichnet, dass**
das Wärmeleitelement (26) an dem Deckel (11) direkt anliegt, wobei zwischen dem Wärmeleitelement (26) und dem Deckel (11) eine Wärmeleitpaste angeordnet ist.

3. Elektromotor nach Anspruch 1,
**dadurch gekennzeichnet, dass**
das Dichtelement (28) durch eine Sicherungsscheibe vorgespannt ist, die auf das Wärmeleitelement (26) aufgepresst ist.

4. Elektromotor nach einem der vorhergehenden Ansprüche,
**dadurch gekennzeichnet, dass**
eine Steuerungselektronik vorgesehen ist, die auf einer Leiterplatte (32) angeordnet ist, wobei die Leiterplatte (32) eine Durchgangsöffnung (33) aufweist, durch die sich das Wärmeleitelement (26) hindurch erstreckt.

5. Elektromotor nach einem der vorhergehenden Ansprüche,
**dadurch gekennzeichnet, dass**
die Leiterplatte (32) in dem Statorraum (30) angeordnet ist.

6. Elektromotor nach einem der vorhergehenden Ansprüche,
**dadurch gekennzeichnet, dass**
das Wärmeleitelement (26) zumindest abschnittsweise von dem Lagerträger (21) umspritzt ist.

7. Elektromotor mit einem Motorgehäuse (10), in dem ein Stator (31) und ein Rotor (41) angeordnet sind, wobei der Rotor (41) in einem Lagerträger (21) drehbar gelagert ist, in dem ein Wärmeleitelement (26) angeordnet ist, in dem ein Wälzlager (43) des Rotors (41) fixiert ist, und wobei der Lagerträger (21) mit einem Deckel (11) des Motorgehäuses (10) in wärmeleitendem Kontakt steht, so dass im Wälzlager (43) entstehende Lagerwärme über das Wärmeleitelement (26), den Lagerträger (21) und den Deckel (11) nach außen abgeführt wird,
**dadurch gekennzeichnet, dass**
das Wärmeleitelement (26) durch eine beidseitig längsaxial offene Hülse gebildet ist, die länger als das Wälzlager (43) ist.

8. Elektromotor nach Anspruch 7,
**dadurch gekennzeichnet, dass**
der Lagerträger (21) einen Boden (24) aufweist, der direkt an dem Deckel (11) des Motorgehäuses (10) anliegt, wobei zwischen dem Lagerträger (21) und/oder der Leiterplatte (32) und dem Deckel (11) eine Wärmeleitpaste angeordnet ist.

9. Elektromotor nach einem der Ansprüche 7 bis 8,
**dadurch gekennzeichnet, dass**
die Hülse stirnseitig einen nach radial innen vorstehenden Flansch (29) aufweist, der eine Halteöffnung (22b) begrenzt und formschlüssig in einem Hinterschnitt (22a) einer Lageraufnahme (22) des Lagerträgers (21) aufgenommen ist.

10. Elektromotor nach Anspruch 9,
**dadurch gekennzeichnet, dass**
die Halteöffnung (22b) eine mehreckige Form aufweist.

## Claims

1. An electric motor having a motor housing (10), in which a stator (31) and a rotor (41) are arranged, wherein the rotor (41) is rotatably mounted in a bearing carrier (21) in which is arranged a heat-conducting element (26) in which a rolling bearing (43) of the rotor (41) is fixed, wherein the heat-conducting element (26) is directly in heat-conducting contact with a cover (11) of the motor housing (10), so that bearing heat produced in the rolling bearing (43) is dissipated to the outside by way of the heat-conducting element (26) and the cover (11), wherein the bearing carrier (21) together with the heat-conducting element (26) forms a fluid-tight, in particular gas-tight, separating element (20) between a rotor space (40) in which the rotor (41) is arranged and a stator space (30) in which the stator (31) is arranged, wherein the bearing carrier (21) has an end-face opening (23) through which the heat-conducting element (26) extends and projects over an end portion (25) of the bearing carrier (21) and reaches up to the cover (11), and wherein the bearing carrier (21), in the region of the end-face opening (23), has an annular cutout (27) in which a sealing element (28) is arranged.

2. An electric motor according to claim 1,
**characterised in that**
the heat-conducting element (26) lies directly against the cover (11), with a heat transfer compound being arranged between the heat-conducting element (26) and the cover (11).

3. An electric motor according to claim 1,
**characterised in that**
the sealing element (28) is prestressed by a securing washer which is pressed onto the heat-conducting element (26).

4. An electric motor according to one of the preceding claims,
**characterised in that**
control electronics are provided which are arranged on a printed circuit board (32), with the printed circuit board (32) having a through-opening (33) through which the heat-conducting element (26) extends.

5. An electric motor according to one of the preceding claims,
**characterised in that**
the printed circuit board (32) is arranged in the stator space (30).

6. An electric motor according to one of the preceding claims,
**characterised in that**
the heat-conducting element (26) is encapsulated at least in portions by the bearing carrier (21).

7. An electric motor having a motor housing (10), in which a stator (31) and a rotor (41) are arranged, wherein the rotor (41) is rotatably mounted in a bearing carrier (21) in which is arranged a heat-conducting element (26) in which a rolling bearing (43) of the rotor (41) is fixed, and wherein the bearing carrier (21) is in heat-conducting contact with a cover (11) of the motor housing (10), so that bearing heat produced in the rolling bearing (43) is dissipated to the outside by way of the heat-conducting element (26), the bearing carrier (21) and the cover (11),
**characterised in that**
the heat-conducting element (26) is formed by a sleeve which is open longitudinally axially on both sides and is longer than the rolling bearing (43).

8. An electric motor according to claim 7,
**characterised in that**
the bearing carrier (21) has a base (24) which lies directly against the cover (11) of the motor housing (10), with a heat transfer compound being arranged between the bearing carrier (21) and/or the printed circuit board (32) and the cover (11).

9. An electric motor according to one of claims 7 to 8,
**characterised in that**
the sleeve has on its end face a flange (29) projecting radially inwards which bounds a holding opening (22b) and is received in a form-fit in an undercut (22a) of a bearing receptacle (22) of the bearing carrier (21).

10. An electric motor according to claim 9,
**characterised in that**
the holding opening (22b) is polygonal in shape.

## Revendications

1. Moteur électrique avec un carter de moteur (10), dans lequel sont disposés un stator (31) et un rotor (41), dans lequel le rotor (41) est logé de manière rotative dans un support à palier (21) dans lequel est disposé un élément thermoconducteur (26), dans lequel est fixé un palier à rouleaux (43) du rotor (41), dans lequel l'élément thermoconducteur (26) est en contact thermoconducteur direct avec un couvercle (11) du carter de moteur (10), de sorte que la chaleur dégagée dans le palier à rouleaux (43) est évacuée vers l'extérieur par l'intermédiaire de l'élément thermoconducteur (26) et du couvercle (11), dans lequel le support à palier (21) forme, conjointement avec l'élément thermoconducteur (26), un élément de séparation (20) entre une chambre de rotor (40), dans laquelle se trouve le rotor (41), et une chambre de stator (30) dans laquelle se trouve le stator (31), dans lequel le support à palier (21) présente une ouverture frontale (23) à travers laquelle l'élément thermoconducteur (26) s'étend et dépasse d'une portion d'extrémité (25) du support à palier (21) et arrive jusqu'au couvercle (11) et dans lequel le support à palier (21) présente, au niveau de l'ouverture frontale (23), un évidement annulaire (27) dans lequel est disposé un élément d'étanchéité (28).

2. Moteur électrique selon la revendication 1
**caractérisé en ce que**
l'élément thermoconducteur (26) s'appuie directement contre le couvercle (11), dans lequel, entre l'élément thermoconducteur (26) et le couvercle (11), est disposée une pâte thermoconductrice.

3. Moteur électrique selon la revendication 1
**caractérisé en ce que**
l'élément d'étanchéité (28) est précontraint par une rondelle de fixation, qui est comprimée sur l'élément thermoconducteur (26).

4. Moteur électrique selon l'une des revendications précédentes,
**caractérisé en ce que**
une électronique de commande est prévue, qui est disposée sur un circuit imprimé (32), dans lequel le circuit imprimé (32) présente une ouverture de passage (33) à travers laquelle s'étend l'élément thermoconducteur (26).

5. Moteur électrique selon l'une des revendications précédentes,
**caractérisé en ce que**
le circuit imprimé (32) est disposé dans la chambre de stator (30).

6. Moteur électrique selon l'une des revendications précédentes,
**caractérisé en ce que**
l'élément thermoconducteur (26) est enrobé par extrusion au moins à certains endroits par le support à palier (21).

7. Moteur électrique avec un carter de moteur (10), dans lequel sont disposés un stator (31) et un rotor (41), dans lequel le rotor (41) est logé de manière rotative dans un support à palier (21) dans lequel est disposé un élément thermoconducteur (26), dans lequel est fixé un palier à rouleaux (43) du rotor (41) et dans lequel le support à palier (21) est en contact thermoconducteur avec un couvercle (11) du carter de moteur (10), de sorte que de sorte que la chaleur dégagée dans le palier à rouleaux (43) est évacuée vers l'extérieur par l'intermédiaire de l'élément thermoconducteur (26), du support à palier (21) et du couvercle (11),
**caractérisé en ce que**
l'élément thermoconducteur (26) est constitué d'un manchon, ouvert des deux côtés dans la direction axiale longitudinale, qui est plus long que le support à palier (43).

8. Moteur électrique selon la revendication 7,
**caractérisé en ce que**
le support à palier (21) comprend un fond (24) qui s'appuie directement contre le couvercle (11) du carter de moteur (10), dans lequel, entre le support à palier (21) et/ou le circuit imprimé (32) et le couvercle (11), est disposée une pâte thermoconductrice.

9. Moteur électrique selon l'une des revendications 7 à 8,
**caractérisé en ce que**
le manchon présente, côté frontal, une bride (29) dépassant radialement vers l'intérieur, qui délimite une ouverture de maintien (22b) et qui est logée par complémentarité de forme dans une contre-dépouille (22a) d'un logement de palier (22) du support à palier (21).

10. Moteur électrique selon la revendication 9,
**caractérisé en ce que**
l'ouverture de maintien (22b) présente une forme polygonale.
